# EUROPÄISCHE PATENTANMELDUNG

(11) **EP 1 130 366 A2**
(43) Veröffentlichungstag der Anmeldung: **05.09.2001**
(21) Anmeldenummer: 00116299.9
(22) Anmeldetag: 10.08.2000
(51) Int. Cl.: G01F 1/66

(54) **Messrohr einer Ultraschall-Mediumdurchflussmesseinrichtung**

(30) Priorität: 21.12.1999 SI 9900282
(71) Anmelder: Iskraemeco, Merjenje in Upravljanje Energije, D.D., 4000 Kranj (SI)
(72) Erfinder: Babic, Matjaz, 1000 Ljubljana (SI)
(74) Vertreter: HOFFMANN - EITLE

(57) **Zusammenfassung**

Das erfindungsgemässe Messrohr der Ultraschall-Mediumdurchflussmesseinrichtung ermöglicht die Herstellung von Messrohren 1 für verschiedene Nenndurchflüsse mit möglichst wenigen verschiedenen Teilen, da bei dem Übergang auf einen anderen Nenndurchfluss nur die Weite w des Teiles 3 des Messrohres 1 geändert werden muss, wobei der Teil 2 mit den Ultraschallwandlern unverändert bleiben kann. Die Breite des Ultraschallbündels, der ungefähr gleich der Weite w sein muss, wird bei unveränderten Abmessungen der piezoelektrischen Plättchen k mit der Breite b der Elektroden e eingestellt. Wenn die Weite w grösser als die halbe Breite a des piezokeramischen Plättchens k ist, wird die Elektrode e in der Form von zwei oder mehreren Streifen g hergestellt, deren gemeinsame Breite b' ungefähr gleich der Weite w ist.

## Beschreibung

### Bereich der Technik

Die Erfindung gehört in den Bereich der Technik der Medium -Volumendurchflussmesseinrichtungen.
Nach der IPK ist sie in die Klasse G01F1/66 eingereiht.

### Stand der Technik

In der Patentschrift DE 9 420 760 wird ein Messrohr mit einem kreisförmigen inneren Querschnitt und walzenförmigen Ultraschallwandlem mit einer kreisförmigen Strahlungsfläche beschrieben. Die angeführte Messzelle kann an einen erhöhten Nenndurchfluss mit einer Vergrösserung des Innenquerschnitts des Messrohres angepasst werden, wobei die Form und die Grösse der beiden Ultraschallwandler unverändert bleiben. Der Nachteil dieser Lösung befindet sich darin, dass bei der Vergrösserung des Innendurchmessers des Messrohres auch die Oberfläche der schrägen Reflektoren vergrössert werden muss, weswegen jedoch der Mediumdurchfluss behindert und deswegen der Druckabfall vergrössert werden. Wegen der Turbulenz erhöht sich auch die Möglichkeit einer Ablagerungsansammlung.
In der Patentschrift EP 0 303 255 ist ein Messrohr mit einem rechteckigen Innenquerschnitt beschrieben. Die Ultraschallwandler besitzen eine kreisförmige Strahlungsfläche und strahlen die Ultraschallschwingungen rechteckig zur Achse des Messrohres ab. Die Anpassung an einen grösseren Nenndurchfluss des Mediums kann mit einer Vergrösserung der Innenweite des Rohres durchgeführt werden, wobei die Form und die Grösse der Ultraschallwandler unverändert bleiben.
Zur Erhaltung des Geschwindigkeitsprofils und der damit verbundenen richtigen Einbeziehung der Beiträge der einzelnen Teile des Geschwindigkeitsprofils zum Messergebnis kann das Rohr eine dünne längsliegende Scheidewand mit kreisförmigen Öffnungen besitzen. Eine ähnliche Lösung ist in der US-Patentschrift 4 365 518 beschrieben, verwendet wird sie aber auch in dem Messgerät von Siemens Ultraheat 2WR4421. Der Nachteil dieser Lösung befindet sich darin, dass die Scheidewand einen zusätzlichen Druckabfall verursacht und in den Öffnungen können sich auch Ablagerungen ansammeln. Ein zusätzlicher Nachteil besteht auch darin, dass mit der Vergrösserung der Rohrweite der ausgestrahlte Schallstrom nicht direkt proportionell wächst.

### Technisches Problem

Mit der Erfindung wird das technische Problem einer derartigen Konstruktion des Messrohres gelöst, die bei der Fertigung des Rohres für verschiedene Nenndurchflüsse möglichst wenige verschiedene Teile verlangen wird..

### Beschreibung der neuen Lösung

Das gestellte technische Problem wurde erfindungsgemäss mit einem Messrohr mit einem rechteckigen Innenquerschnitt und mit Ultraschallwandlern gelöst, deren piezokeramische Plättchen eine rechteckige Form besitzen und deren Strahlungsfläche auch eine Rechteckform besitzt, die jedoch mit besonders geformten Elektroden ausgestattet sind, die bei jeder Breite des Messrohres eine entsprechende Schallbestrahlung zusichern.
In der Fortsetzung wird die Lösung genauer beschrieben mit Hilfe der Zeichnungen, in denen zeigen:
- Fig. 1:: das Messrohr für kleinere Durchflüsse mit der dazugehörenden Form des Ultraschallwandlers,
- Fig. 2:: das Messrohr für mittelgrosse Durchflüsse mit der dazugehörenden Form des Ultraschallwandlers und
- Fig. 3:: das Messrohr für grosse Durchflüsse mit der dazugehörenden Form des Ultraschallwandlers

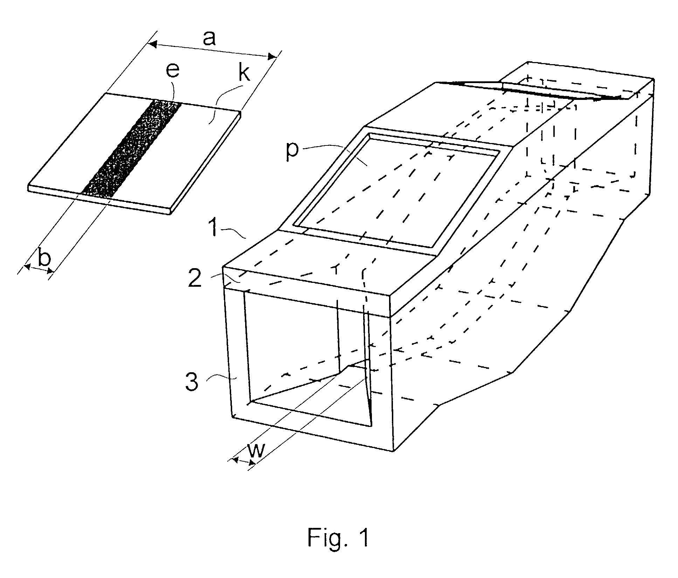

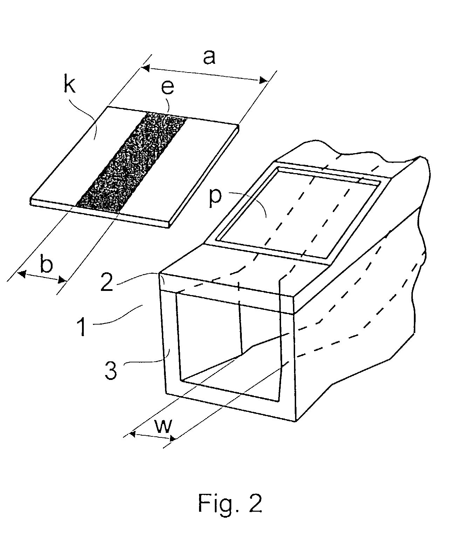

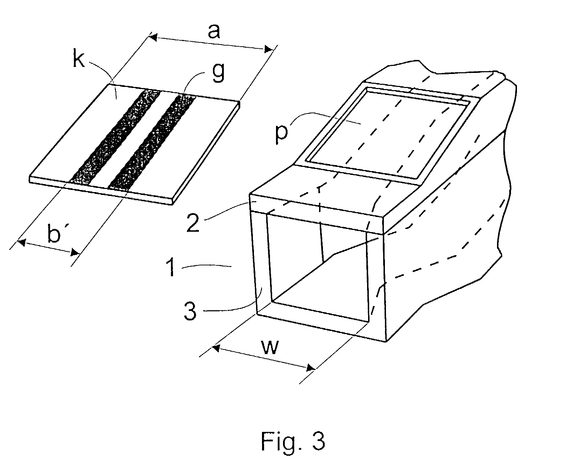

Wie aus Fig. 1 bis 3 ersichtlich ist, besteht das Messrohr 1 aus zwei Teilen. Teil 2 enthält Vertiefungen p für die piezokeramischen Plättchen, der Teil 3 begrenzt jedoch im Wesen den Raum, durch den sich das Medium bewegt. Das Messrohr für verschiedene Nenndurchflüsse ist derart hergestellt, dass der Teil 3 eine entsprechende Weite w besitzt, wogegen der Teil 2 unverändert bleibt. Auch die Grösse und die Form der piezokeramischen Plättchen bleibt für einen breiten Bereich der Nenndurchflüsse unverändert. Der Schallfluss im Rohr 1, der alle Teile des Geschwindigkeitsprofils umfasst, wird erfindungsgemäss mit einer besonderen Form der Elektroden e an den piezokeramischen Plättchen erzielt. Die Elektrode e besitzt die Form eines Streifens, der längs der Bewegungsrichtung des Mediums gerichtet ist. Die Breite des Streifens b ist ungefähr gleich der Weite w. In Fig. 2 ist eine Ausführung des Messrohres 1 mit einer grösseren Weite w dargestellt, weswegen auch die Breite b der Elektrode e vergrössert ist. Wenn die innere Weite w des Messrohres 1 grösser als die Hälfte der Breite a des piezokeramischen Plättchens k ist, kann die Elektrode e in der Form von zwei oder mehreren parallelen Streifen g geformt sein (Fig.3), wobei die Breite b' aller Streifen g gleich der Weite w sein muss. Es ist erlaubt, die Weite w bis zur Grösse der Breite a des piezokeramischen Plättchens k zu vergrössern.
Das piezokeramische Plättchen k schwingt derart, dass es sich entlang derjenigen Achse dehnt und zusammenzieht, die rechteckig zu seiner Oberfläche zeigt. Die Frequenz dieser Dickenschwingungsart beträgt einige MHz. Bei dieser Frequenz ist die Verteilung der Amplitude auf der Oberfläche ungleichmässig, wobei die einzelnen Oberflächenteile nicht gleichphasig schwingen.

Wenn die obere und untere Elektrode e als ein Streifen geformt sind, kann in einem bestimmten Bereich der Breite b das sogenannte Auftreten des Energieeinfangs erzielt werden, bei dem alle Plättchenteile gleichphasig schwingen, wobei die Schwingungsamplitude im Bereich eines jeden Streifens gleichmässig ist. Der Ultraschallwandler sendet so in das Messrohr 1 Ultraschallschwingungen aus, die eine gute Annäherung der geraden Wellen darstellen. Solange die Weite w des Messrohres 1 gleich der Breite des Streifens b ist, ist eine entsprechende Schallbestrahlung gesichert. Wenn aber die Weite w grösser als die Hälfte a des piezokeramischen Plättchens k ist, kann das Auftreten des Energieeinfangs nicht erreicht werden und die Verteilung der Schwingungsamplitude auf der Oberfläche des Plättchens ist nicht mehr gleichmässig, die Schwingung ist nur noch annähernd gleichphasig. In diesem Fall können Elektroden in der Form von zwei Streifen g verwendet werden. Auf diese Weise wird eine Schwingung erhalten, die im Mittelteil des Plättchens abgeschwächt ist, womit auch im Messergebnis der Beitrag der Scheitel-geschwindigkeit im Geschwindigkeitsprofil abgeschwächt und der Beitrag der Geschwindigkeit links und rechts vom Scheitel erhöht ist. Die Zahl der Streifen g und deren optimale Breite kann durch Versuche bestimmt werden. Mit der beschriebenen Lösung kann eine Ultraschall-Mediumdurchflussmesseinrichtung für den Durchflussbereich von 0,01 bis 2 Qn hergestellt werden, wobei Qn den Nenndurchfluss der Messeinrichtung bedeutet.
Die Teile 2 und 3 des Messrohres sind durch Spritzguss aus thermoplastischen Kunststoffen hergestellt. Für den breiten Bereich der Nenndurchflüsse genügt nur eine Grösse des Teiles 2, die auch die piezokeramischen Plättchen k mit fixen Abmessungen enthält, wobei nur die Elektroden an beiden Seiten dieser Plättchen dem jeweiligen Nenndurchfluss des Mediums angepasst werden müssen. Der Teil 3, der den durchgeflossenen Querschnitt begrenzt, muss in seiner Weite w dem jeweiligen Nenndurchfluss angepasst sein. Für die Änderung der Weite w im Teil 3 genügt jedoch, dass das Werkzeug zu dessen Herstellung einige einstellbare Teile besitzt. Auf diese Weise ist es möglich, dass das Messrohr der Mediumdurchflussmesseinrichtung mit möglichst wenigen verschiedenen Teilen hergestellt wird.

Referenznummern in den Ansprüchen dienen dem besseren Verständnis und sind nicht beschränkend zu verstehen.

## Patentansprüche

1. Messrohr 1 einer Ultraschall-Mediumdurchflussmesseinrichtung, die einen Teil 2 mit Ultraschallwandlern in der Form rechteckiger piezoelektrischer Plättchen k mit Elektroden e an beiden Seiten umfasst, dadurch gekennzeichnet, dass die Elektrode (e) die Form eines Streifens mit der Breite (b) zwischen 25 und 50% der Breite (a) des Plättchens (k) besitzt, wobei die Breite des Streifens (b) gleich der inneren Weite (w) im Teil (3) des Messrohres (1) ist.

2. Messrohr 1 nach Anspruch 1, dadurch gekennzeichnet, dass bei einer inneren Weite (w), die grösser als 50% der Breite (a) des Plättchens (k) ist, die Elektroden (e) die Form von zwei oder mehreren untereinander getrennten Streifen (g) besitzen, deren gemeinsame Breite (b') gleich der Weite (w) ist.
